# EUROPEAN PATENT SPECIFICATION

(11) **EP 2 741 562 B1**
(45) Date of publication and mention of the grant of the patent: **23.08.2017**
(21) Application number: 12306529.4
(22) Date of filing: 06.12.2012
(51) Int. Cl.: H04W 76/02, H04W 36/00, H04W 4/08, H04W 4/00

(54) **Apparatuses, methods, and computer programs for a network node and a mobile transceiver**
Vorrichtungen, Verfahren und Computerprogramme für einen Netzwerkknoten und einen mobilen Sender-Empfänger
Appareils, procédés et programmes informatiques pour un noeud de réseau et un émetteur-récepteur mobile

(43) Date of publication of application: 11.06.2014
(73) Proprietor: ALCATEL LUCENT, 92100 Boulogne-Billancourt (FR)
(72) Inventor: Schaich, Frank, 70469 Stuttgart (DE); Wild, Thorsten, 70435 Stuttgart (DE); Fonseca Dos Santos, André, 70197 Stuttgart (DE); Doetsch, Uwe, 74392 Freudental (DE)
(74) Representative: Wetzel, Emmanuelle

(56) References cited:
- WO-A1-2011/109027
- WO-A1-2011/147462
- US-A1- 2010 009 675
- US-A1- 2012 185 605
- DOPPLER K ET AL: "Device-to-device communication as an underlay to LTE-advanced networks", IEEE COMMUNICATIONS MAGAZINE, IEEE SERVICE CENTER, PISCATAWAY, US, vol. 47, no. 12, 1 December 2009 (2009-12-01), pages 42-49, XP011285852, ISSN: 0163-6804, DOI: 10.1109/MCOM.2009.5350367

## Description

Embodiments of the present invention relate to mobile communications, more particularly but not exclusively to mobile communication networks using direct data sharing between mobile transceivers.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. In order to meet the increasing data demands mobile communication infrastructure becomes more and more dense. One enhanced technology is direct data sharing between mobile transceivers. In other words, instead of transmitting data from a mobile transceiver to the infrastructure of the communication network, data exchange can be organized directly between two mobile transceivers.

Direct data exchange between mobile transceivers of a mobile communication network can be implemented by mobile transceivers receiving and decoding radio signals transmitted by other mobile transceivers. Depending on the radio conditions between two mobile transceivers, direct communication may achieve a higher spectral efficiency than indirect communication through the network's infrastructure. However, the interference condition within the network may change significantly, when radio signals transmitted by mobile transceivers, which are intended to be received by other mobile transceivers, superimpose with radio signals transmitted by the infrastructure, i.e. by base station transceivers, of the mobile communication network. Therefore radio resource management in a communication network using direct communication between mobile transceivers can be critical. Mobile transceivers may use the same radio resources for reception and transmission. Such radio resources may correspond, for example, to time and frequency resources on which mobile transceivers receive signals from other mobile transceivers and base station transceivers and also transmit signals to other mobile transceivers and base station transceivers.

Document US 2012 185 605 A1 discloses methods and apparatus for determining whether two or more communications devices, e.g., wireless terminals, in a communications system should communicate using direct peer to peer communications or via one or more infrastructure elements, e.g., base stations, are described. The determination whether a given pair of communications devices should communicate using direct peer to peer communications, rather than via the infrastructure element(s), is determined by a control device. The control device instructs various wireless terminals to make various signal measurements and/or transmit signals to be measured. Based on the signal measurements the control device estimates interference caused by the direct peer to peer link to the existing communications devices, the direct peer to peer link channel quality and/or interference caused to such a direct peer to peer link by existing communications devices which are communicating using peer to peer signaling and makes a mode decision based on such information.

### Summary

According to the present invention, an apparatus for a network node as set forth in claim 1 and a method for a network node as set forth in claim 10 are provided. Embodiments of the invention are claimed in the dependent claims. Embodiments are based on the finding that content sharing using wireless networks may often take place in a rather localized manner. That is to say the person or the mobile transceiver sharing content may often be in near proximity to at least a part of the group of people or mobile transceivers receiving the content. In this case, direct communication between mobile transceivers, to which it is also referred to as Device-to-Device (D2D) communication, may be enabled. D2D allows for making more efficient use of radio resources utilized by the network in order to transmit said data. It is a further finding that higher network efficiency may be achieved by using Device-to-Base Station-to-Device (D2B2D) communication. In other words base stations may be configured to directly transmit data received from one mobile transceiver to another mobile transceiver by bypassing the backhauling/core network. That is to say it is a finding that the number of hops in such a communication may be reduced by configuring a base station to directly retransmit data received by a mobile transceiver, which is to be shared with another mobile transceiver. Such communication may be applied using different mechanisms and may result in a reduced amount of resources used on the air link and on the backhauling/core network, respectively.

It is a further finding that a base station of a mobile communication system can be made aware of the relative positions of the content addressees, i.e. of the mobile transceivers which should receive the data transmissions of a content sharing mobile transceiver. It is a further finding that such a base station can have or determine different categories or the groups of such mobile transceivers. For example, in a first group there may be one or more mobile transceivers or addressees, which can be served by the same base station as the sharing device, i.e. the sharing mobile transceiver. In other words the mobile transceivers of the first group may be in reach or in the coverage of the sharing mobile transceiver and/or of the base station the sharing mobile transceiver is associated to. Within the first group, it may be further distinguished, whether this base station is a single operator base station or a multi-operator base station. In other words, it is a further finding, that even if a base station is shared by multiple operators, for example, using the concept of virtual base stations, mobile transceivers assigned to different operators may still be served using direct communication. In such a scenario embodiments may implement communication between base station transceivers of different operators, in order to configure mobile transceivers of different operators for direct communication. For example, the operators may share spectrum or bandwidth using common baseband processing at the base station transceiver and the mobile transceivers of both operators are accordingly served in the same band. Such operators may have an agreement of how the radio resources of the commonly used band are shared between them. Some embodiments may, however, also relate to direct communication within the network of a single operator. In some embodiments mobile transceivers within a sharing group being served by a base station transceiver also serving the sharing mobile transceiver may be grouped in the first group.

It is a further finding that a second group can relate to addressees or mobile transceivers in a sharing group, which are in near proximity of the sharing mobile transceivers but served by another base station transceiver. In other words the second group may comprise mobile transceivers which are served by a different base station transceiver than the sharing mobile transceiver, but still are in the coverage of the sharing mobile transceiver and/or of the serving base station of the sharing mobile transceiver. In a similar manner as it was explained above, the other base station transceiver may as well be contracted to another provider or operator. In some embodiments there may be communication between the base station transceiver and the other base station transceiver, i.e. an inter-provider and/or inter-base station communication in order to configure base station transceivers and mobile transceivers from different providers for direct communication. Some embodiments may, however, relate to the single operator case. The second group may then comprise mobile transceivers, which are located in the proximity of the sharing mobile transceiver but served by the other base station transceiver.

In some embodiments a third group may be formed. The third group may comprise addressees or mobile transceivers, which are located farther away, i.e. within a different cell, from the sharing mobile transceiver. In other words, the mobile transceivers comprised in the third group may not be in reach of the sharing mobile transceiver or device and/or of the serving base station of the sharing mobile transceiver.

In some embodiments, considering the above three groups or categories, the first category or group may be served using D2D or D2B2D. In some embodiments this may depend on the quality of the respective radio links. That is to say a mobile transceiver of group one may be served using a D2D link when the D2D radio condition is of good quality, where the quality can, for example, be assessed using beaconing and respective measurements. That is to say the sharing mobile transceiver may provide a beacon, such as a reference or a pilot signal, which the other mobile transceivers receive and indicate the quality of the received signal or information on an estimated radio channel to a configuring network node, e.g. a base station transceiver. D2B2D communication may be used when such a D2D link is in bad quality, i.e. in radio conditions, which would not allow an efficient D2D communication.

In embodiments mobile transceivers, which are grouped in the above second group may be served via D2D if the D2D link or the D2D radio condition is of good quality or they may be served via D2B2D if the D2D link is of bad quality. Considering the multi-operator scenario, the operators may have a respective agreement on D2D communication and configuration. Mobile transceivers of the above third group or category three may be served conventionally, i.e. via the core network. Embodiments may therewith enable a categorization of the addressees or mobile transceivers enabling an application of D2D and D2B2D communication. Embodiments may therewith make more efficient use of radio resources and may enhance a capacity of a mobile communication network.

In embodiments the identification of available D2D links may be based on beaconing. In other words the mobile transceivers under consideration may transmit or send out beacons, as, for example, pilot signals, to be received by nearby devices for estimating the link quality to identify optional D2D links. However, it is a further finding that beaconing does not help to group devices, which are engaging/being engaged into a session to share content and are thus being candidates for D2D and D2B2D connections. This may apply especially if they are served by different providers, here, even beaconing may be enabled by embodiments. Hence, embodiments may even enable D2D and D2B2D transmissions in a multi-operator scenario as well as in a multi-base station scenario and content sharing may be made more efficient as it may not consume extra precious air link and backhauling resources.

Embodiments are further based on the finding that a framework can be defined or provided of applications and Application Programming Interfaces (APIs), which can enable the above categorization or grouping. For example, once a device enters a wireless network it is identified by some means, for example, by its phone number, a social network IDentification (ID), an Internet Protocol (IP) address, etc., and registered to a dedicated network element, which can, for example, be located near an Evolved Packet Core (EPC) of a Long Term Evolution (LTE) network. The registration information may comprise specific information about the respective device; such as service provider and position, for example, in terms of a cell the mobile transceiver or device is attached to or a cell cluster it is close to with respect to receive power level. In embodiments this information can be updated in case of handover. Thus, a cellular network serving the device or mobile transceiver starting a session for sharing content can be made aware of the identities of the devices or mobile transceivers in reach or in coverage and out of reach or coverage, respectively. This way, the respective network element or network node may be enabled to group the ones being engaged into a sharing session according to one or more of the categories given above. In some embodiments a base station initiates the file sharing activity, i.e. it may schedule UpLink (UL) resources to the device sharing data or sharing a file. Based on the grouping or categorization the file reception may then be performed differently in different groups.

For example, the mobile transceivers or devices being addressed by the file sharing activity, which are in close proximity and are being served by the same provider can be ordered or instructed to listen to these UL transmissions in case of D2D or a base station may decode the transmission and forward them directly in the DownLink (DL) to the respective devices bypassing the backhauling/core network in case of D2B2D.

Moreover, devices or mobile transceivers being addressed by the file sharing activity, which are in close proximity and which are being served by another provider may be ordered or instructed to listen to these UL transmissions in case of D2D. In other words, the respective network components may take into account a respective agreement between the providers, as naturally these devices may have to synchronize themselves to another system. Alternatively, a base station may receive the transmission and forward the data to the other base station transceiver, which delivers the data to respective devices of the other operator. Embodiments may therewith enable an inter-base station communication, which may even be assigned to different operators.

Furthermore, in embodiments devices being addressed by a file sharing activity and which are not in close proximity can be served by either the same or another provider, which may be carried out the conventional way.

Embodiments provide an apparatus for a network node of a mobile communication system. In other words embodiments may provide said apparatus to be operated or included in a network node. In the following the apparatus will also be referred to as network node apparatus. Embodiments may also provide a network node, such as a base station, a radio network controller, a router, a server, etc., which comprises the network node apparatus.

The apparatus may hence be part of a mobile communication system. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers, which are composed of one or more central units and one or more remote units. A mobile transceiver may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission and reception of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a remote unit, a remote head, a remote radio head, a base station transceiver or a NodeB, an eNodeB, respectively. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The mobile communication system is operable to serve a plurality of mobile transceivers. In embodiments the network node apparatus comprises an interface module operable to receive information on a group of one or more mobile transceivers the sharing mobile transceiver intends to share data with. In embodiments the interface module can be implemented as any means for interfacing or communicating. Hence, the interface module may correspond to means for communicating, a communication module, a communication unit, a communication device, an interface unit, an interface device, etc. As will be detailed subsequently, the interface can be operable to enable a communication between the network node apparatus and another network node apparatus, such as a gateway, an application server, a base station, etc. or to enable a communication between the network node apparatus and a mobile transceiver. The interface module can therefore be operable to communicate according to a respective communication protocol. The interface can be operable to communicate using electrical or optical signals. For example, the interface module may be operable to enable inter-network node communication using optical fibers. In other embodiments, for example, when the network node apparatus is implemented at a base station, the interface module can also be operable to enable a wireless communication with a mobile transceiver, for example, according to one of the above listed communication systems or standards.

The network node apparatus further comprises a controller module, which is operable to determine information on a sub-group of one or more mobile transceivers from the group of mobile transceivers, which are in radio conditions to directly receive the data communication from the sharing mobile transceiver. The controller module is further operable to configure the sub-group of mobile transceivers to directly receive data transmissions from the sharing mobile transceiver.

In embodiments the controller module can be implemented as any means for controlling, such as a controller device a controller unit, a processor, a Digital Signal Processor (DSP), a general purpose processor, or any processing means being operable to execute accordingly adapted software. In other words, the controller module is operable to or adapted to group some of the mobile transceivers into a sub-group. The mobile transceivers of the sub-group are capable of directly communicating with the sharing mobile transceiver. Moreover, the controller module is operable to configure these mobile transceivers to actually directly receive data transmissions from the sharing mobile transceiver. Directly receiving data transmission from the sharing mobile transceiver may correspond to being enabled to receive radio signals transmitted by the sharing mobile transceiver in a quality that allows for decoding said radio signals and to detect the corresponding data from said radio signals. In some embodiments this direct communication may correspond to D2D or D2B2D communication.

In some embodiments one or more of the mobile transceivers in the sub-group can be operated by a different operator than the sharing mobile transceiver. In line with the above, embodiments may therefore enable a D2D communication between mobile transceivers, which are in close proximity but are operated by different operators. Embodiments may therewith enable inter-operator direct communication. Moreover, in some embodiments the sharing mobile transceiver can be associated to a base station transceiver and one or more mobile transceivers of the group of mobile transceivers may be associated with another base station transceiver. The base station and the other base station transceiver can be operated by different operators. Hence embodiments may enable a more efficient or radio resource effective communication by enabling inter-operator D2D, D2B2D, and inter-base station communication.

In even further embodiments the sharing mobile transceiver can be associated to a base station transceiver and one or mobile transceivers of the group of mobile transceivers can be associated with another base station transceiver. The controller module can be operable to provide configuration information to the other base station transceiver such that the other base station transceiver is enabled to configure the one or more mobile transceivers of the group of mobile transceivers to directly receive a data transmission from the sharing mobile transceiver. That is to say embodiments may enable an inter-base station communication, such that one base station can configure an associated mobile transceiver to directly receive radio signals from a mobile transceiver associated with another base station transceiver. In a network scenario a situation may occur, where two mobile transceivers are in close proximity to each other but assigned to different base station transceivers. In other words the cell border may lie between two mobile transceivers although these two mobile transceivers are fairly close. In such an embodiment an adjacent cell or a base station transceiver operating the adjacent cell may configure an associated mobile transceiver to listen to the radio signals transmitted by a mobile transceiver associated to another cell.

In further embodiments the controller module can be further operable to determine update information on the sub-group based on a predetermined updating configuration. For example, a user may update the group of mobile transceivers it intends to share data with frequently. This information may then as well be updated in the network node apparatus. In some embodiments, the updating configuration may be predetermined in that an operator of the network node sets this parameter in a fixed manner. In other embodiments the predetermined updating configuration may correspond to a configuration enabling the network node apparatus to frequently receive updates on the grouping. In yet another embodiment the network node apparatus may be configured with predetermined update configuration, such that polling of sub-group information occurs in a periodical or event-triggered manner. For example, the network node apparatus can be configured such that the controller module is operable to frequently request updated sub-group information from an application server or a mobile transceiver or any other network node.

The controller module can be further operable to configure a transceiver module of a base station transceiver to receive the data transmission from the sharing mobile transceiver and to directly retransmit the data transmission to the sub-group of mobile transceivers. In other words, the controller module can be operable to enable D2B2D communication as well. That is to say the controller module can be operable to configure a base station transceiver to receive a data transmission and without forwarding the detected data to any other network node retransmit the same data into a cell the data was received from. This may enable mobile transceivers of the group, which are not able to receive a direct communication, but are still associated with the same cell, to receive such a data transmission with a low delay. In other words embodiments may keep a transmission path of such data transmission short. If D2D transmission may not be possible, in embodiments D2B2D communication may be applied, according to the above group one, which may correspond to the sub-group of mobile transceivers.

In embodiments the controller module can be operable to configure a base station transceiver to which the sharing mobile transceiver is associated to forward a received data transmission from the sharing mobile transceiver to another base station transceiver one or more mobile transceivers of the group of mobile transceivers are associated with. In line with the above, the transmission path may be kept short in embodiments, in some embodiments even as short as possible. Keeping the path short may here be interpreted with respect to the number of hops or nodes in the path. Instead of forwarding received data transmissions through the backhaul or core network, embodiments may configure involved base station transceivers to directly communicate said data transmissions among each other, in order to shorten the communication path from the sharing mobile transceiver to the mobile transceivers the shared content is addressed to. If these other mobile transceivers are not in close proximity and do not allow for D2D communication, if they are assigned to a different cell or base station transceiver and do also not allow for D2B2D communication, in embodiments the data transmissions between the involved base station transceivers can be forwarded directly and therewith a low delay can still be enabled.

As it has already been mentioned above, in embodiments the interface module can be operable to receive the information on the group from the sharing mobile transceiver. Additionally or alternatively the interface module can be operable to receive the information on the group through a gateway from outside the mobile communication system. In other words, the information on the group of mobile transceivers with which the content is shared may be received from the sharing mobile receiver itself or from the outside of the mobile communication system. It is assumed that the mobile communication system is connected to the outside world, as for example the internet, using a gateway, such as a Serving Gate Way (SGW) or a Packet data network Gate Way (PGW), etc. For example, a user of the sharing mobile transceiver may participate in a social network. Therewith, an application executed on the mobile transceiver may be in communication with an application server outside the mobile communication system, with one of the above mentioned gateways in between. In such an embodiment the information on the group of mobile transceivers or users to share the content with may be provided by the application server from outside the mobile communication system. In further embodiments the sharing mobile transceiver can be associated to a base station transceiver and one or more mobile transceivers of the group of mobile transceivers can be associated with another base station transceiver. The configuration module can then be operable to configure the one or more mobile transceivers to measure signals of the sharing mobile transceiver. In other words, in embodiments, the configuration module may configure certain mobile transceivers of the group to measure or listen to radio signals transmitted by the sharing mobile transceiver. These radio signals may then enable the one or more mobile transceivers of the group to determine a radio link quality between themselves and the respective sharing mobile transceiver, although the one or more mobile transceivers can be associated to the other base station transceiver and even with another operator.

Accordingly, in further embodiments the configuration module can be further operable to trigger a handover of the one or more mobile transceivers to the base station transceiver the sharing mobile transceiver is associated with, when an information on a measurement result indicates that the one or more mobile transceivers are enabled to directly receive a data transmission from the sharing mobile transceiver. The information on a measurement result can, for example, be in terms of a Signal-to-Noise-Ratio (SNR), a Signal-to-Interference-and-Noise-Ratio (SINR), a Signal-to-Interference-Ratio (SIR), a Received Signal Code Power (RSCP), a Received Signal Strength Indicator (RSSI), the Bit Error Rate (BER), a block error rate, a frame error rate, a path loss, etc. Any information on a measure that would allow indicating the quality of the radio link between the sharing mobile transceiver and the respective mobile transceivers of the group may allow the controller module to decide on a D2D communication and therewith trigger a handover.

Embodiments may provide a base station transceiver comprising the above network node apparatus. In embodiments the base station transceiver may further comprise an interface module operable to communicate shared data content from the sharing mobile transceiver with another base station transceiver. This is an embodiment according to the scenario, which was already described above, in which the transmission path is kept short and in which base station transceivers directly exchange or forward data transmissions from such a content sharing session. In embodiments the interface module may correspond to any means for inter-base station communication. For example, the interface module can be implemented as any means for interfacing or communicating, an interface unit, an interface device, a communication module, a communication unit, a communication device, etc. In some embodiments the further interface module may correspond to the X2-interface as specified between base station transceivers, i.e. NodeBs, in an LTE network.

In further embodiments the base station transceiver can even be associated with a different operator than the other base station transceiver. As it has already been mentioned above, the base station transceivers may not necessarily belong to the same operator. Embodiments may therefore provide the advantage, that even among operators more efficient use of the radio and backhaul resources can be made.

Embodiments further provide an apparatus for a mobile transceiver of a mobile communication system. In other words embodiments may provide said apparatus to be operated or included in a mobile transceiver. In the following the apparatus will also be referred to as mobile transceiver apparatus. The mobile transceiver may correspond to the above sharing mobile transceiver and it can be associated with the base station transceiver. The mobile transceiver apparatus comprises a transceiver module operable to communicate with the base station transceiver. The transceiver module may correspond to any means for transmitting or for receiving, such as a transmitter or receiver. Hence the transceiver module may correspond to a transmitter module, a transmitter unit, a transmitter device, receiver module, receiver unit, a receiver device, etc. As such the transceiver module may comprise typical receiver components such as one or more antennas, a Low Noise Amplifier (LNA), one or more filters, one or more converters, an analog/digital converter, etc. In some embodiments the transceiver module may comprise typical transmitter components, such as one or more transmit antennas, one or more power amplifiers, one or more filters, one or more converters, etc. The transceiver module may therefore allow a communication of radio signals and/or data with the base station transceiver.

The mobile transceiver apparatus further comprises a processing module operable to execute an application for forming a group of one or more mobile transceivers the mobile transceiver intends to share data with. The processing module may correspond to a processor, a processing unit, a processing device, any means for processing, such as a DSP, multi-purpose processor, a Central Processing Unit (CPU), etc. The application may then correspond to any software which is executable on the processing module, such as a social network or any other application, which allows grouping of users and content sharing within such a group of users. The transceiver module is further operable to provide information on the group of one or more mobile transceivers to the base station transceiver and to an application server.

The application server may correspond to any network node, which is operable to execute the respective counterpart of the application. The counterpart may be any platform or social network the user of the mobile transceiver is able to log on to or to simply use to form the groups of mobile transceivers or other users to share the content with. In other words, the mobile transceiver apparatus is operable to share the information on the group not only with the application server, where a part of the actual application may be executed but also with the base station transceiver as a component of the mobile communication network. In some embodiments such communication of information on the group of the one or more mobile transceivers to share the content with may be implemented as an inter-protocol layer communication.

In other words, in some embodiments the processing module can be operable to provide the information on the group to the base station transceiver by communicating the information from an application layer protocol entity to a protocol layer entity, which is terminated at the base station transceiver, and using the protocol layer entity, which is terminated at the base station transceiver, to communicate the information to the base station transceiver. For example, the information from an application layer i.e. the grouping within the social network, may be communicated to one of the lower layers, such as layer 3 or 2 (such as Radio Resource Control (RRC) or Medium Access Control (MAC)) of the mobile communication system, which are terminated at the base station transceiver. Embodiments may therewith provide the advantage that the information on the grouping is made available to the mobile communication network, enabling more efficient communication such as the above described D2D or D2B2D communication.

Embodiments further provide a method for a mobile transceiver of a mobile communication system. The mobile transceiver is associated with a base station transceiver. The method comprises communicating with the base station transceiver and executing an application for forming a group of one or more mobile transceivers the mobile transceiver intends to share data with. The method further comprises providing information on the group of one or more mobile transceivers to the base station transceiver and to an application server.

Embodiments further provide a method for a network node of a mobile communication system. The mobile communication system is operable to serve a plurality of mobile transceivers. The method comprises receiving information on a group of one or more mobile transceivers a sharing mobile transceiver intends to share data with. The method further comprises determining information on a sub-group of one or more mobile transceivers in the group of mobile transceivers, which are in radio conditions to directly receive a data communication from the sharing mobile transceiver. The method further comprises configuring the sub-group of mobile transceivers to directly receive data transmissions from the sharing mobile transceiver.

Embodiments further provide a computer program having a program code for performing one of the above methods, when the computer program is executed on a computer, a processor or a programmable hardware.

Embodiments may provide the advantage that group communication in a mobile communication makes more efficient use of radio resources. The system capacity may be enhanced. Moreover, as transmission paths a kept short using D2D and/or D2B2D transmission, the latency for data transmission may be improved. Embodiments may therewith provide better user experiences or grade of service, e.g. with respect to delay critical gaming applications in a group of users. Furthermore, precious air, backhaul and core resources may be saved or used more efficiently.

### Brief description of the Figures

Some other features or aspects will be described using the following non-limiting embodiments of apparatuses and/or methods and/or computer programs by way of example only, and with reference to the accompanying Figures, in which
Fig. 1 illustrates an embodiment of a network node apparatus;
Fig. 2 illustrates an embodiment of a mobile transceiver apparatus;
Fig. 3 illustrates a network scenario with embodiments;
Fig. 4 depicts a file sharing scenario in a network illustrating multiple embodiments;
Fig. 5 illustrates an embodiment of a mobile transceiver;
Fig. 6 shows a block diagram of an embodiment of a method for a mobile transceiver; and
Fig. 7 shows a block diagram of an embodiment of a method for network node.

### Description of some embodiments

Various embodiments will now be described in more detail with reference to the accompanying drawings. In the Figures, the thicknesses of lines, layers and/or regions may be exaggerated for clarity.

Accordingly, while embodiments are capable of various modifications and alternative forms, embodiments thereof are shown by way of example in the Figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the Figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple Figures carrying the same reference signs, but may not be described multiple times in detail. A detailed description of a component may then apply to that component for all its occurrences.

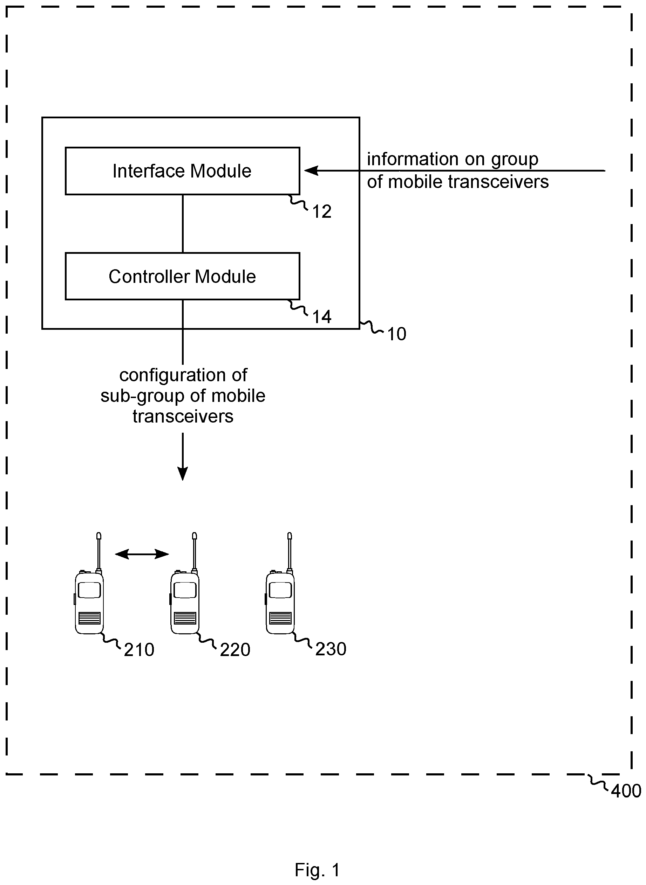

In the following Figures optional components are shown in dotted lines. Fig. 1 shows an embodiment of an apparatus 10 for a network node of a mobile communication system 400. The mobile communication system 400 is operable to serve a plurality of mobile transceivers, which are exemplified in Fig. 1 as mobile transceivers 210, 220 and 230. The network node apparatus 10 comprises an interface module 12, which is operable to receive information on a group of one or more of the mobile transceivers 220, 230 a sharing mobile transceiver 210 intends to share data with. In other words in the embodiment shown in Fig. 1 mobile transceiver 210 intends to share data with mobile transceivers 220 and 230. The network node apparatus 10 further comprises a controller module 14, which is operable to determine information on a sub-group of one or more mobile transceivers 220 from the group of mobile transceivers 220 and 230, which are in radio conditions to directly receive a data communication from the sharing mobile transceiver 210. The controller module 14 is further operable to configure the sub-group of mobile transceivers 220 to directly receive data transmissions from the sharing mobile transceiver. Furthermore, the interface module 12 is coupled to the controller module 14. In other words, in the embodiment depicted in Fig. 1 it is assumed that mobile transceiver 220 is in the sub-group, i.e. it experiences radio conditions, which allow a direct communication with the sharing mobile transceiver 210. It is further assumed that the mobile transceiver 230 is not in a condition to directly receive the radio signals from the sharing mobile transceiver 210.

In some embodiments the one or more mobile transceivers 220 of the sub-group can be operated by a different operator than the sharing mobile transceiver 210. Moreover, the sharing mobile transceiver 210 is associated to a base station transceiver and the one or more mobile transceivers of the group of mobile transceivers 220 and 220 can be associated with another base station transceiver, wherein the base station transceiver and the other base station transceiver are operated by different operators, as will be detailed subsequently.

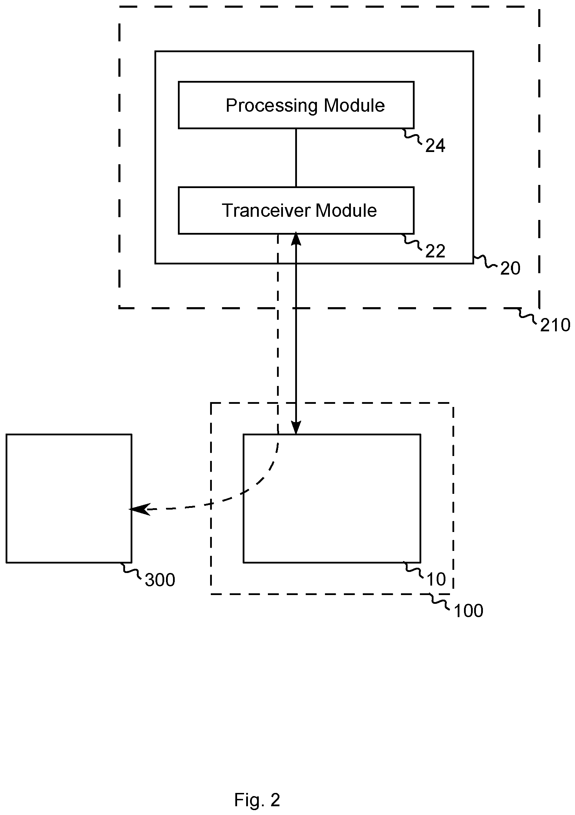

Fig. 2 illustrates an embodiment of an apparatus 20 for a mobile transceiver 210 of the mobile communication system 400. Fig. 2 further details the sharing mobile transceiver 210 in Fig. 1. The mobile transceiver 210 is associated with the base station transceiver 100 which comprises, as an example, the network node apparatus 10 as described with respect to Fig. 1. The mobile transceiver apparatus 20 comprises a transceiver module 22, which is operable to communicate with the base station transceiver 100. Moreover, the mobile transceiver apparatus 200 comprises a processing module 24, which is operable to execute an application for forming a group of one or more mobile transceivers 220 and 230, as shown in Fig. 1, the mobile transceiver 210 intends to share data with. The transceiver module 22 is further operable to provide information on the group of one or more mobile transceivers 220 and 230 to the base station transceiver 100 and to an application server 300. As shown in Fig. 2 the transceiver module 22 is coupled to the processing module 24.

In the some embodiments the processing module 24 is operable to provide the information on the group to the base station transceiver 100 by communicating the information from an application layer protocol entity to a protocol layer entity, which is terminated at the base station transceiver 100. The processing module 24 can then use the protocol layer entity, which is terminated at the base station transceiver 100, to communicate the information to the base station transceiver 100. In some embodiments the information from an application layer i.e. the grouping within the social network, is communicated to the RRC layer of the mobile transceiver 210 and then RRC signaling can be used to communicate the information to the base station transceiver 100.

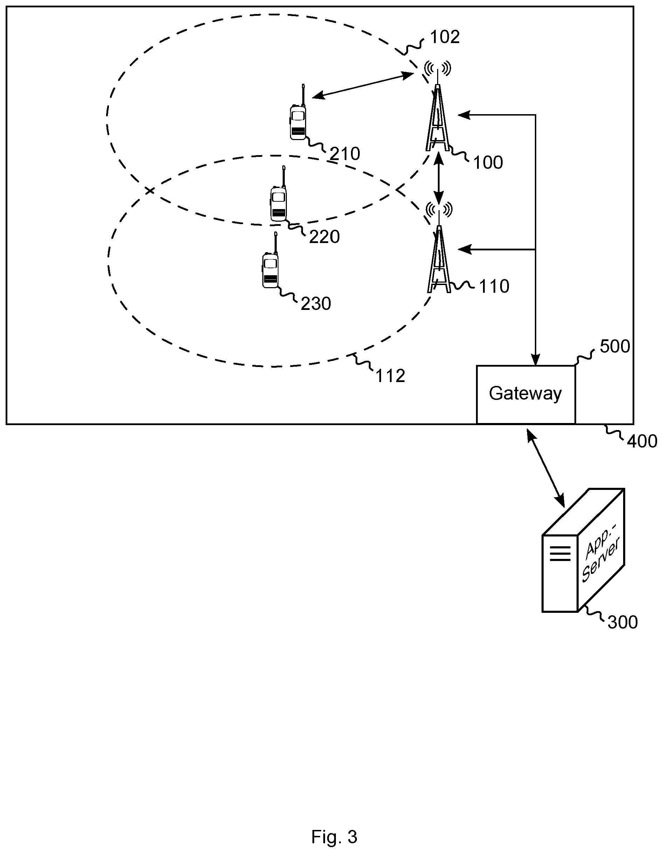

Fig. 3 depicts a network scenario with multiple embodiments. Fig. 3 shows the mobile communication system 400 comprising a base station transceiver 100, which is assumed to comprise one of the above described network node apparatuses 10. Fig. 3 further shows another base station transceiver 110, which belongs to the mobile communication system 400. It is further assumed that the base station transceiver 100 has a coverage area which is indicated by area 102 and that the other base station transceiver 110 has a coverage area as indicated by the area 112 in Fig. 3. Within the mobile communication system 400 there is a sharing mobile transceiver 210, which is assumed to comprise a mobile transceiver apparatus 20 as described with the help of Fig. 2. Moreover, Fig. 3 shows mobile transceivers 220 and 230 with which the sharing mobile transceiver 210 intends to share data with. Fig. 3 further shows a gateway 500, which connects the mobile communication system 400 with the application server 300. Moreover it is assumed that the mobile transceiver 210 executes a social network application, which allows grouping the mobile transceivers 220 and 230 for content sharing.

In an embodiment, which will be described with the help of Fig. 3, the sharing mobile transceiver 210 is associated to base station transceiver 100 and the one or more mobile transceivers of the group of mobile transceivers 220 and 230 can be associated with the other base station transceiver 110. The controller module 14 in the network node apparatus 10 is operable to provide configuration information to the other base station transceiver 110 such that the other base station transceiver 110 is enabled to configure the one or more mobile transceivers of the group of mobile transceivers 220 and 230 to directly receive a data transmission from the sharing mobile transceiver 210.

In other words, in a first scenario, which is considered with the help of Fig. 3, the sharing mobile transceiver 210 is associated with base station transceiver 100. The other two mobile transceivers 220 and 230 are in proximity of the sharing mobile transceiver 210 but associated with the other base station transceiver 110. In this embodiment configuration information is provided from the base station transceiver 100 to the other base station transceiver 110, in order to configure the mobile transceivers 220 and 230 to be able to directly receive the radio signals from the sharing mobile transceiver 210.

In this embodiment and also in the following it will be assumed that the controller module 14 is further operable to determine update information on the sub-group based on a predetermined updating configuration. For example, frequent updates on the grouping may be determined by the application server 300 from the mobile transceiver 210. In other words, whenever a user of the social networking application at the sharing mobile transceiver 210 changes the grouping, the change in the grouping will be communicated with the application server 300. Such information may be provided by the sharing mobile transceiver 210 or by the application server 300. In some embodiments this information can be proactively polled by the network node apparatus 10, which is comprised in the base station transceiver 100.

In yet another embodiment, which will be described with the help of Fig. 3, mobile transceiver 220 is in the sharing group of the sharing mobile transceiver 210, but not in its close proximity. Mobile transceiver 220 is associated with base station transceiver 100. In other words the sharing mobile transceiver 210 and the mobile transceiver 220 are both associated with base station 100, however it is assumed that the radio condition in between these two mobile transceivers 210 and 220 does not allow for a direct communication. In this embodiment the controller module 14 at the network node apparatus 10 at the base station transceiver 100 is operable to configure a transceiver module of the base station transceiver 100 to receive the data transmission from the sharing mobile transceiver 210 and to directly retransmit the data transmission to the sub-group of mobile transceivers, in this embodiment only established by mobile transceiver 220. This embodiment shows that if a direct communication, D2D, between a sharing mobile transceiver 210 and another mobile transceiver 220 is not possible, a direct retransmission by a base station transceiver 100, D2B2D, can still enable an efficient and low delay communication.

In a further embodiment it is assumed that the sharing mobile transceiver 210 is associated to base station transceiver 100 and the mobile transceivers 220 and 230 are associated with the other base station transceiver 110. Moreover it is assumed that the radio conditions between the sharing mobile transceiver 210 and the other mobile transceivers 220 and 230 are not good enough to allow for D2D communication. In this embodiment the controller module 14 is operable to configure the base station transceiver 100 to which the sharing mobile transceiver 210 is associated to forward a received data transmission from the sharing mobile transceiver 210 to the other base station transceiver 110 the one or more mobile transceivers of the group of mobile transceivers 220 and 230 are associated with. Accordingly the other base station transceiver 110 is then configured or operable to forward the data transmission received from base station transceiver 100 to the mobile transceivers 220 and 230.

Generally in embodiments the interface module 12 as part of the network node apparatus 10 can be operable to receive the information on the group from the sharing mobile transceiver 210. In such an embodiment and in line with Fig. 3, the sharing mobile transceiver 210 would then provide such information to the base station transceiver 100. In some embodiments this information can be provided by an application, for example, by a social networking application. Hence in some embodiments cross layer communication between an application layer and the lower layer can be carried out, in the present embodiment the application layer communicates the information of the group to layer 3 of the base station transceiver. In another embodiment the interface module 12 can be operable to receive the information on through the gateway 500 from outside the mobile communication 400, for example, from the application server 300. In this embodiment an application such as a social networking application, which is supported or even executed by the application server 300 provides the information through the gateway 500 to the network node apparatus 10 at the base station transceiver 100.

In the following embodiment it is assumed that the sharing mobile transceiver 210 is associated with base station transceiver 100. Moreover, it is assumed that the other mobile transceivers 220 and 230 are associated with the base station transceiver 110. Moreover it is assumed, that the radio conditions between the sharing mobile transceiver 210 and the other mobile transceivers 220 and 230 are good enough to allow for direct communication, i.e. D2D. However, the sharing mobile transceiver 210 is associated to base station transceiver 100 and one or more mobile transceivers of the group of mobile transceivers 220 and 230 are associated with the other base station transceiver 110. The configuration module 14 is operable to configure the one or more mobile transceivers 220 and 230 to measure signals of the sharing mobile transceiver 210. The configuration module may then provide according configuration information to the other base station transceiver 110.

Moreover, in addition the configuration module 14 can be further operable to trigger a handover of one or more mobile transceivers 220 and 230 to the base station transceiver 100 the sharing mobile transceiver 210 is associated with. In some embodiments this can be carried out when an information on a measurement result, which can be provided from the mobile transceivers 220 and 230 to base station transceiver 110 and further to base station transceiver 100, indicates that the one or more mobile transceivers 220 and 230 are enabled to directly receive a data transmission from the sharing mobile transceiver 210. In other words, the configuration module 14 may trigger the other base station transceiver 110 to configure the mobile transceivers 220 and 230 to listen to radio signals, for example, a beacon, transmitted by the sharing mobile transceiver 210. Upon reception of these radio signals the mobile transceivers 220 and 230 may provide a quality indication to the other base station transceiver 110. For example, such a quality indication may correspond to a reception level of the signals or a signal-to-interference ratio of the signals transmitted by the sharing mobile transceiver 210. The other base station transceiver 110 may then provide or forward said measurement results to the base station transceiver 100 and the network node apparatus 10. The controller module 14 may then trigger the base station transceiver 110 to handover the mobile transceivers 220 and 230 based on the measurement results.

As it has already been mentioned above embodiments may provide a base station transceiver 100 comprising the apparatus 10. As Fig. 3 also indicates the base station transceiver may have a further interface module operable to communicate shared data content from the sharing mobile transceiver 210 to the other base station transceiver 110. As it has also been mentioned above, in some embodiments the base station transceivers 100 and 110 may even be associated with different operators.

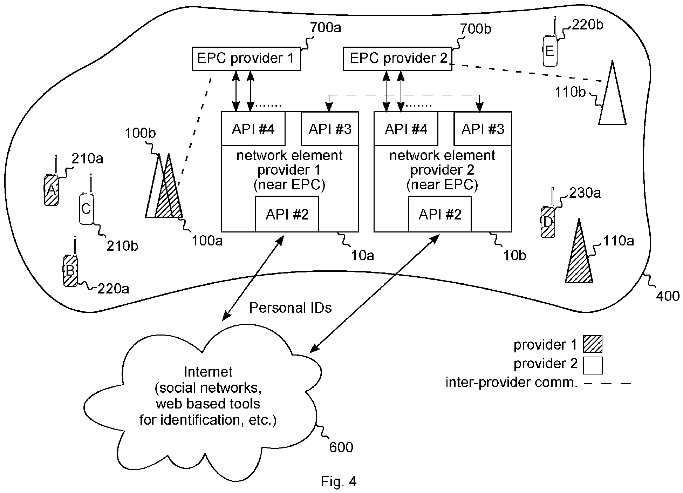

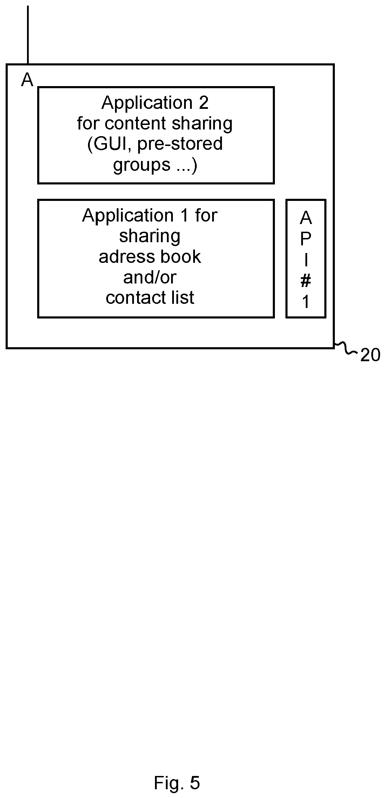

In the following Fig. 4 and 5 will be used to further detail an embodiment. One embodiment will be described having a framework of applications, Application Programming Interfaces (APIs) and functionalities to enable resource efficient content sharing as follows. Fig. 4 illustrates a mobile communication network 400, which is connected to the internet 600. In the Internet social networks, web based tools for identification, etc. are available. Moreover within the mobile communication network 400 there are two providers, provider 1, for which the components are indicated with "a", and provider 2, for which the components are indicated with "b". Components of the first provider comprise a first base station 100a and a second base station 110a, which are used to serve mobile transceivers 210a, 220a and 230a. Moreover the network of provider 1 comprises the network node apparatus 10a, which in this embodiment is shown outside the base station transceivers 100a, 110a in a separate node within the network. Moreover the communication network 400 is assumed to be an LTE network comprising the Evolved Packet Core (EPC) 700a of provider 1.

Accordingly, the mobile communication network 400 comprises components of provider 2. The network part of provider 2 comprises base station transceivers 100b and 110b, which are used to serve mobile transceivers 210b and 220b. Moreover provider 2 also operates a network node apparatus 10b, which is located next to the EPC 700b of provider 2. Moreover each of the two network nodes 10a and 10b comprises several APIs, which are numbered as API#2, API#3, and API#4 and for which the details will be provided subsequently. In the present embodiment it is assumed that when entering the cellular network a device is registered to the dedicated network element, i.e. to the network node apparatus 10a or 10b. This registration may be carried out by means of, for example, a phone number, an IP-address, a social network ID, etc. For the registration API#4 is used towards the respective EPC 700a or 700b and API#2 is used to the social network/internet application. This is shown in Fig. 4 by the respective arrows. In other words, in this embodiment interface modules 12a and 12b of the respective network nodes 10a and 10b realize the respective APIs.

As has been detailed above, the two network node apparatuses 10a and 10b establish means to define sharing groups possibly to be stored within the dedicated network elements 10a and 10b.

Fig. 5 illustrates another embodiment of a mobile transceiver apparatus 20. In the embodiment shown in Fig. 5 two applications are executed on the mobile transceiver apparatus 20. Application 1 is used for sharing address book and contact list information. Application 2 is used for the content sharing itself. Application 2 may provide a Graphical User Interface (GUI), pre-stored groups, etc., to a user. The mobile transceivers in Fig. 4 210ab, 220ab, 230a are assumed to comprise an according mobile transceiver apparatus 20 as depicted in Fig. 5. Hence, each of the mobile transceivers comprises means to define sharing groups possibly to be stored within the dedicated network element 10a or 10b. As shown in Fig. 5 an application 1 installed on the user device or mobile transceiver uses an API#1 to share the phone book and/or a contact list of the user with the network. This sharing may be application triggered or network triggered, allowing to define different sharing groups. A content sharing application 2 on the device of the user, i.e. the mobile transceiver, is executed in order to share data. This can, for example, be carried out with pre-stored groups etc. Application 2 may share API#1 with application 1 or may use an alternative API 1b at the mobile transceiver. The APIs at the mobile transceiver apparatus 20 are implemented by the transceiver module 22 and the processing module 24, which provide according protocol stacks and processing capabilities for the applications and their interfaces.

As shown in Fig. 4 API#2 in the present embodiment lies between a social network or another web-based tool with personal identification and the cellular network 400 to make the latter aware of defined groups of the user or mobile transceiver 210. The groups are defined regarding content sharing purposes. Moreover, user specific information may be communicated using API#2, for example, like whether a user is online and its IP-address.

As shown in Fig. 4 API#3 may be used for inter-operator communication. In the present embodiment API#3 supports inter-operator content sharing. The user specific information can be polled or pushed between different cellular networks of different operators. The API is also able to negotiate roaming, in case devices are capable of communicating in both operators' networks. A user or a mobile transceiver can handover to another operator's radio access network for listening in a D2D way to the shared content data transmission, as it is described above. Network server elements can be used to take over the mentioned API functionalities, which are not related to the UE applications. With the help of those API's, applications and functionalities in network assisted content sharing may be enabled in embodiments. For example, background tasks can be used to save time and reduce latency in the actual sharing task and thus improve the user experience. Alternatively, these activities performed in background could be directly triggered by the sharing task as it will be described below, which reduces the overhead but may increase the latency.

In an embodiment the cellular network, the controller module 14, respectively, may update on a regular basis, or triggered by a content sharing session being initiated, its knowledge on the neighborhood relationships between the mobiles. That is to say, the quality of the device-to-device links may be determined from time to time, for example, using the above beaconing and measurement reports. The neighborhood relationships between the mobiles registered to the content sharing mobile may, for example, be determined using beaconing. The cellular network may then update the group information on a regular basis storing these relationships within the dedicated network elements 10a and 10b, using APIs #1 and #2, as well as applications 1 and 2 as indicated in Fig. 5. The network tries to locate users in the content sharing groups, whether they are connected to this network, for example, by checking phone numbers, IP-addresses, etc. Moreover, the network node apparatuses 10a and 10b determine whether these users or mobile transceivers are in near proximity of the user sharing the content, i.e. the sharing mobile transceiver 210, for example, with the help of a beaconing procedure as indicated above.

Moreover, the network node apparatuses 10a and 10b can be operable to enhance a communication for users, which are not connected to the same network and which might be connected to other networks. Here API#3 is used to arrange the inter-operator procedures. In the embodiment depicted in Fig. 4 provider 1 may request from provider 2 the following information. For example, provider 2 may request information on whether user C or mobile transceiver 210b is connected to the network of provider 2. Moreover, in one embodiment, if user C is connected to the network of provider 2, further information may be on whether user C is located near to user A, i.e. the sharing mobile transceiver 210a. In order to detect this information the further information exchange could be initiated between both providers. For example, a user A was forced or configured to measure the strongest cell IDs in the network of provider 2 and this information is sent to provider 2.

Provider 1 may send the location information about user A like the GPS-position, at least the GPS-position of the cell, in which user A is served. From this information provider 2 may identify user C, i.e. mobile transceiver 210b, as a potential D2D candidate. This information can be fed back to provider 1 and a handover may be triggered for user C in order to switch the network of provider 1. The network of provider 1, i.e. its network node apparatus 10a, may then start, for example, the beaconing procedure. Moreover, in the embodiment when a user or a mobile transceiver intends to share data, it may trigger via application 2 the content sharing process to the respective predefined group. The cellular network, i.e. the network node apparatuses 10a and 10b may then use their knowledge from the background task as described above. Users or mobile transceivers, which are in the content sharing group and are in proximity, i.e. which are suitable for D2D, may then obtain the shared data via D2D. Users in proximity operating in other networks may be handed over in order to listen to the shared content in D2D mode as well. Users in the same cell, but not close enough for D2D, may be served using D2B2D. Remaining users may be served conventionally.

Embodiments may therewith provide the advantage that the cellular network may be enabled to apply D2D and D2B2D communications efficiently. This way precious air, backhaul and core resources may be saved, the overall network performance may improve. Moreover, embodiments may provide a more efficient use of network resources as file sharing via D2D and D2B2D is enabled. Therewith, further communication resources may be saved on the air link and on the backhauling and core networks, making file sharing more efficient.

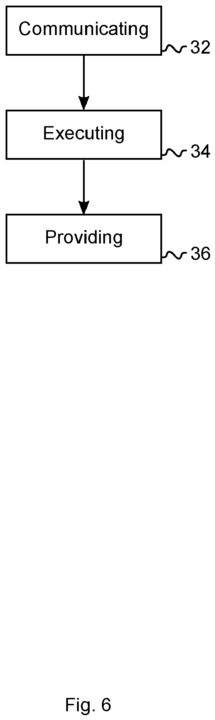

Fig. 6 illustrates a block diagram of a flow chart of an embodiment of a method for a mobile transceiver 210 of a mobile communication system 400. The mobile transceiver 210 is associated with the base station transceiver 100. The method comprises a step of communicating 32 with the base station transceiver 100. The method further comprises a step of executing 34 an application for forming a group of one or more mobile transceivers 220, 230 the mobile transceiver 210 intends to share data with. The method further comprises a step of providing 36 information on the group of one or more mobile transceivers 220, 230 to the base station transceiver 100 and to an application server 300.

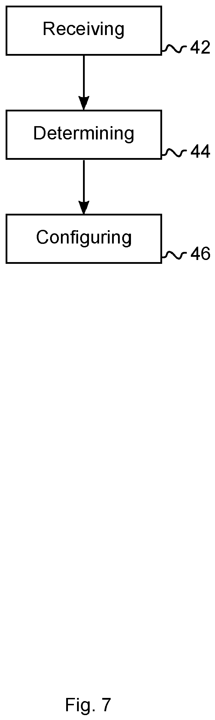

Fig. 7 illustrates a block diagram of a flow chart of an embodiment of a method for a network node of a mobile communication system 400. The mobile communication system is operable to serve a plurality of mobile transceivers 210, 220, and 230. The method comprises a step of receiving 42 information on a group of one or more mobile transceivers 220, 230 a sharing mobile transceiver 210 intends to share data with. The method further comprises a step of determining 44 information on a sub-group of one or more mobile transceivers 220 in the group of mobile transceivers 220, 230, which are in radio conditions to directly receive a data communication from the sharing mobile transceiver 210. The method further comprises a step of configuring 46 the sub-group of mobile transceivers 220 to directly receive data transmissions from the sharing mobile transceiver 210.

Embodiments further provide computer programs for performing one of the above methods, when a computer program is executed on a computer, processor or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for interfacing", "means for communicating", "means for processing", "means for transmitting", "means for receiving", etc., may be provided through the use of dedicated hardware, such as "an interface", "a communicator", "a processor", "a transmitter", "a receiver", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a network node of a mobile communication system, the mobile communication system (400) being operable to serve a plurality of mobile transceivers (210;220;230), the network node apparatus (10) comprising
an interface module (12) operable to receive information on a group of one or more mobile transceivers (220;230) a sharing mobile transceiver (210) intends to share data with;
a controller module (14) operable to determine information on a sub-group of one or more mobile transceivers (220) from the group of mobile transceivers (220;230) which are in radio conditions to directly receive a data communication from the sharing mobile transceiver (210), wherein the controller module (14) is operable to configure the sub-group of mobile transceivers (220) to directly receive data transmissions from the sharing mobile transceiver (210),
**characterized in that** the sharing mobile transceiver (210) is associated to a base station transceiver and wherein one or more mobile transceivers of the group of mobile transceivers (220;230) are associated with another base station transceiver, wherein the controller module (14) is operable to provide configuration information to the other base station transceiver that enable the other base station transceiver to configure the one or more mobile transceivers of the group of mobile transceivers (220;230) to directly receive a data transmission from the sharing mobile transceiver (210).

2. The apparatus (10) of claim 1, wherein one or more of the mobile transceivers (220) of the sub-group are operated by a different operator than the sharing mobile transceiver (210), and/or wherein the sharing mobile transceiver (210) is associated to a base station transceiver, and wherein one or more mobile transceivers of the group of mobile transceivers (220;230) are associated with another base station transceiver, wherein the base station transceiver and the other base station transceiver are operated by different operators.

3. The apparatus (10) of claim 1, wherein the controller module (14) is further operable to determine update information on the sub-group based on a predetermined updating configuration, and/or wherein the controller module (14) is further operable to configure a transceiver module of a base station transceiver (100) to receive the data transmission from the sharing mobile transceiver (210) and to directly retransmit the data transmission to the sub-group of mobile transceivers (220).

4. The apparatus (10) of claim 1, wherein the controller module (14) is operable to configure a base station transceiver (100) to which the sharing mobile transceiver (210) is associated to forward a received data transmission from the sharing mobile transceiver (210) to another base station transceiver (110) one or more mobile transceivers of the group of mobile transceivers (220;230) are associated with.

5. The apparatus (10) of claim 1, wherein the interface module (12) is operable to receive the information on the group from the sharing mobile transceiver (210) and/or wherein the interface module (12) is operable to receive the information on the group through a gateway (500) from outside of the mobile communication system (400).

6. The apparatus (10) of claim 1, wherein the sharing mobile transceiver (210) is associated to a base station transceiver (100), and wherein one or more mobile transceivers of the group of mobile transceivers (220;230) are associated with another base station transceiver (110), wherein the configuration module (14) is operable to configure the one or more mobile transceivers (220;230) to measure signals of the sharing mobile transceiver (210).

7. The apparatus (10) of claim 6, wherein the configuration module (14) is further operable to trigger a handover of the one or more mobile transceivers (220;230) to the base station transceiver (100) the sharing mobile transceiver (210) is associated with, when an information on a measurement result indicates that the one or more mobile transceivers (220;230) are enabled to directly receive a data transmission from the sharing mobile transceiver (210).

8. A base station transceiver (100) comprising the apparatus (10) of claim 1.

9. The base station transceiver (100) of claim 8 comprising a further interface module operable to communicate shared data content from the sharing mobile transceiver (210) with another base station transceiver (110), and/or wherein the base station transceiver (100) is associated with a different operator than the other base station transceiver (110).

10. A method for a network node of a mobile communication system (400), the mobile communication system (400) being operable to serve a plurality of mobile transceivers (210;220;230), wherein the method comprises
receiving (42) information on a group of one or more mobile transceivers (220;230) a sharing mobile transceiver (210) intends to share data with;
determining (44) information on a sub-group of one or more mobile transceivers (220) in the group of mobile transceivers (220;230), which are in radio conditions to directly receive a data communication from the sharing mobile transceiver (210); and
configuring (46) the sub-group of mobile transceivers (220) to directly receive data transmissions from the sharing mobile transceiver (210) **characterized in that** the sharing mobile transceiver (210) is associated to a base station transceiver and wherein one or more mobile transceivers of the group of mobile transceivers (220;230) are associated with another base station transceiver, the method further comprising
providing configuration information to the other base station transceiver that enable the other base station transceiver to configure the one or more mobile transceivers of the group of mobile transceivers (220;230) to directly receive a data transmission from the sharing mobile transceiver (210).

11. A computer program having a program code for performing the method of claim 10, when the computer program is executed on a computer, processor or programmable hardware.

## Patentansprüche

1. Vorrichtung (10) für einen Netzwerkknoten eines mobilen Kommunikationssystems, wobei das mobile Kommunikationssystem (400) betreibbar ist zum Bedienen einer Vielzahl von mobilen Transceivern (210; 220; 230), wobei die Netzwerkknotenvorrichtung (10) umfasst
ein Schnittstellenmodul (12), das betreibbar ist zum Empfangen von Information über eine Gruppe von einem oder mehreren Transceivern (220; 230), mit der ein teilender mobiler Transceiver (210) Daten teilen will;
ein Controller-Modul (14), das betreibbar ist zum Bestimmen von Information über eine Untergruppe eines oder mehrerer mobiler Transceiver (220) von der Gruppe mobiler Transceiver (220; 230), die sich in Funkbedingungen befinden, um direkt eine Datenkommunikation vom teilenden mobilen Transceiver (210) zu empfangen, wobei das Controller-Modul (14) betreibbar ist zum Konfigurieren der Untergruppe von mobilen Transceivern (220) zum direkten Empfangen von Datenübertragungen von dem teilenden mobilen Transceiver (210),
**dadurch gekennzeichnet, dass**
der teilende mobile Transceiver (210) mit einem Basisstations-Transceiver verbunden ist und wobei ein oder mehrere mobile Transceiver von der Gruppe mobiler Transceiver (220; 230) mit einem anderen Basisstations-Transceiver verbunden sind, wobei das Controller-Modul (14) betreibbar ist zum Bereitstellen von Konfigurationsinformation an den anderen Basisstations-Transceiver, die dem anderen Basisstations-Transceiver ermöglicht, den einen oder die mehreren mobilen Transceiver von der Gruppe mobiler Transceiver (220; 230) zu konfigurieren zum direkten Empfangen einer Datenübertragung von dem teilenden mobilen Transceiver (210).

2. Vorrichtung (10) nach Anspruch 1, wobei der eine oder die mehreren der mobilen Transceiver (220) der Untergruppe von einem anderen Operator betrieben werden als der teilende mobile Transceiver (210), und/oder wobei der teilende mobile Transceiver (210) verbunden ist mit einem Basisstations-Transceiver, und wobei ein oder mehrere mobile Transceiver der Gruppe von mobilen Transceivern (220; 230) mit einem anderen Basisstations-Transceiver verbunden sind, wobei der Basisstations-Transceiver und der andere Basisstations-Transceiver von verschiedenen Operatoren betrieben werden.

3. Vorrichtung (10) nach Anspruch 1, wobei das Controller-Modul (14) weiterhin betreibbar ist zum Bestimmen von Aktualisierungsinformation für die Untergruppe auf Grundlage einer vorbestimmten Aktualisierungskonfiguration, und/oder wobei das Controller-Modul (14) weiterhin betreibbar ist zum Konfigurieren eines Transceiver-Moduls eines Basisstations-Transceivers (100) zum Empfangen der Datenübertragung vom teilenden mobilen Transceiver (210) und zum direkten erneuten Übertragen der Datenübertragung auf die Untergruppe von mobilen Transceivern (220).

4. Vorrichtung (10) nach Anspruch 1, wobei das Controller-Modul (14) betreibbar ist zum Konfigurieren eines Basisstations-Transceivers (100), mit dem der teilende mobile Transceiver (210) verbunden ist zum Weiterleiten einer empfangenen Datenübertragung vom teilenden mobilen Transceiver (210) zu einem anderen Basisstations-Transceiver (110), mit dem einer oder mehrere mobile Transceiver der Gruppe von mobilen Transceivern (220; 230) verbunden sind.

5. Vorrichtung (10) nach Anspruch 1, wobei das Schnittstellenmodul (12) betreibbar ist zum Empfangen der Information über die Gruppe von dem teilenden mobilen Transceiver (210) und/oder wobei das Schnittstellenmodul (12) betreibbar ist zum Empfangen der Information über die Gruppe durch einen Gateway (500) von außerhalb des mobilen Kommunikationssystems (400).

6. Vorrichtung (10) nach Anspruch 1, wobei der teilende mobile Transceiver (210) verbunden ist mit einem Basisstations-Transceiver (100), und wobei einer oder mehrere mobile Transceiver der Gruppe von mobilen Transceivern (220; 230) verbunden sind mit einem anderen Basisstations-Transceiver (110), wobei das Konfigurationsmodul (14) betreibbar ist zum Konfigurieren des einen oder der mehreren mobilen Transceiver (220; 230) zum Messen von Signalen des teilenden mobilen Transceivers (210).

7. Vorrichtung (10) nach Anspruch 6, wobei das Konfigurationsmodul (14) weiterhin betreibbar ist zum Auslösen eines Handovers des einen oder der mehreren mobilen Transceiver (220; 230) an den Basisstations-Transceiver (100), mit dem der teilende mobile Transceiver (210) verbunden ist, wenn eine Information über ein Messergebnis anzeigt, dass der eine oder die mehreren mobilen Transceiver (220; 230) fähig sind, direkt eine Datenübertragung von dem teilenden mobilen Transceiver (210) zu empfangen.

8. Ein Basisstations-Transceiver (100), der die Vorrichtung (10) nach Anspruch 1 umfasst.

9. Basisstations-Transceiver (100) nach Anspruch 8, umfassend ein weiteres Schnittstellenmodul, das betreibbar ist zum Kommunizieren geteilten Dateninhalts vom teilenden mobilen Transceiver (210) mit einem anderen Basisstations-Transceiver (110), und/oder wobei der Basisstations-Transceiver (100) verbunden ist mit einem anderen Operator als der andere Basisstations-Transceiver (110).

10. Verfahren für einen Netzwerkknoten eines mobilen Kommunikationssystems (400),
wobei das mobile Kommunikationssystem (400) betreibbar ist zum Bedienen einer Vielzahl von mobilen Transceivern (210; 220; 230), wobei das Verfahren umfasst Empfangen (42) von Information über eine Gruppe von einem oder mehreren mobilen Transceivern (220; 230), mit denen ein teilender mobiler Transceiver (210) Daten zu teilen beabsichtigt;
Bestimmen (44) von Information über eine Untergruppe von einem oder mehreren mobilen Transceivern (220) in der Gruppe von mobilen Transceivern (220; 230), die sich in Funkbedingungen befinden zum direkten Empfangen einer Datenkommunikation von dem teilenden mobilen Transceiver (210); und
Konfigurieren (46) der Untergruppe von mobilen Transceivern (220) zum direkten Empfangen von Datenübertragungen von dem teilenden mobilen Transceiver (210), **dadurch gekennzeichnet, dass** der teilende mobile Transceiver (210) verbunden ist mit einem Basisstations-Transceiver und wobei einer oder mehrere mobile Transceiver der Gruppe von mobilen Transceivern (220; 230) verbunden sind mit einem anderen Basisstations-Transceiver, wobei das Verfahren weiterhin umfasst
Bereitstellen von Konfigurationsinformation für den anderen Basisstations-Transceiver, die den anderen Basisstations-Transceiver befähigt, den einen oder die mehreren mobilen Transceiver der Gruppe von mobilen Transceivern (220; 230) zu konfigurieren zum direkten Empfangen einer Datenübertragung von dem teilenden mobilen Transceiver (210).

11. Computerprogramm mit einem Programmcode zum Durchführen des Verfahrens nach Anspruch 10, wenn das Computerprogramm auf einem Computer, Prozessor oder programmierbarer Hardware ausgeführt wird.

## Revendications

1. Appareil (10) destiné à un noeud de réseau d'un système de communication mobile, le système de communication mobile (400) permettant de desservir une pluralité d'émetteurs-récepteurs mobiles (210 ; 220 ; 230), l'appareil de noeud de réseau (10) comprenant :
un module d'interface (12) permettant de recevoir des informations sur un groupe d'un ou plusieurs émetteurs-récepteurs mobiles (220 ; 230) avec lequel un émetteur-récepteur mobile de partage (210) prévoit de partager des données ;
un module de commande (14) permettant de déterminer des informations sur un sous-groupe d'un ou plusieurs émetteurs-récepteurs mobiles (220) du groupe d'émetteurs-récepteurs mobiles (220 ; 230) dont les conditions radio leur permettent de recevoir directement une communication de données en provenance de l'émetteur-récepteur mobile de partage (210), le module de commande (14) permettant de configurer le sous-groupe d'émetteurs-récepteurs mobiles (220) pour recevoir directement des transmissions de données en provenance de l'émetteur-récepteur mobile de partage (210),
**caractérisé en ce que**
l'émetteur-récepteur mobile de partage (210) est associé à un émetteur-récepteur de station de base et dans lequel un ou plusieurs émetteurs-récepteurs mobiles du groupe d'émetteurs-récepteurs mobiles (220 ; 230) sont associés à un autre émetteur-récepteur de station de base, dans lequel le module de commande (14) permet de fournir des informations de configuration à l'autre émetteur-récepteur de station de base qui permettent à l'autre émetteur-récepteur de station de base de configurer le ou les émetteurs-récepteurs mobiles du groupe d'émetteurs-récepteurs mobiles (220 ; 230) pour recevoir directement une transmission de données en provenance de l'émetteur-récepteur mobile de partage (210).

2. Appareil (10) selon la revendication 1, dans lequel un ou plusieurs des émetteurs-récepteurs mobiles (220) du sous-groupe sont exploités par un opérateur différent de celui exploitant l'émetteur-récepteur mobile de partage (210), et/ou dans lequel l'émetteur-récepteur mobile de partage (210) est associé à un émetteur-récepteur de station de base, et dans lequel un ou plusieurs émetteurs-récepteurs mobiles du groupe d'émetteurs-récepteurs mobiles (220 ; 230) sont associés à un autre émetteur-récepteur de station de base, dans lequel l'émetteur-récepteur de station de base et l'autre émetteur-récepteur de station de base sont exploités par des opérateurs différents.

3. Appareil (10) selon la revendication 1, dans lequel le module de commande (14) permet en outre de déterminer des informations de mise à jour sur le sous-groupe en fonction d'une configuration de mise à jour prédéterminée, et/ou dans lequel le module de commande (14) permet en outre de configurer un module d'émetteur-récepteur d'un émetteur-récepteur de station de base (100) pour recevoir la transmission de données en provenance de l'émetteur-récepteur mobile de partage (210) et retransmettre directement la transmission de données au sous-groupe d'émetteurs-récepteurs mobiles (220).

4. Appareil (10) selon la revendication 1, dans lequel le module de commande (14) permet de configurer un émetteur-récepteur de station de base (100) auquel l'émetteur-récepteur mobile de partage (210) est associé pour transmettre une transmission de données reçue en provenance de l'émetteur-récepteur mobile de partage (210) à un autre émetteur-récepteur de station de base (110) auquel un ou plusieurs émetteurs-récepteurs mobiles du groupe d'émetteurs-récepteurs mobiles (220 ; 230) sont associés.

5. Appareil (10) selon la revendication 1, dans lequel le module d'interface (12) permet de recevoir les informations sur le groupe en provenance de l'émetteur-récepteur mobile de partage (210) et/ou dans lequel le module d'interface (12) permet de recevoir les informations sur le groupe via une passerelle (500) depuis l'extérieur du système de communication mobile (400).

6. Appareil (10) selon la revendication 1, dans lequel l'émetteur-récepteur mobile de partage (210) est associé à un émetteur-récepteur de station de base (100), et dans lequel un ou plusieurs émetteurs-récepteurs mobiles du groupe d'émetteurs-récepteurs mobiles (220 ; 230) sont associés à un autre émetteur-récepteur de station de base (110), dans lequel le module de configuration (14) permet de configurer le ou les émetteurs-récepteurs mobiles (220 ; 230) pour mesurer les signaux de l'émetteur-récepteur mobile de partage (210).

7. Appareil (10) selon la revendication 6, dans lequel le module de configuration (14) permet en outre de déclencher un transfert du ou des émetteurs-récepteurs mobiles (220 ; 230) vers l'émetteur-récepteur de station de base (100) auquel l'émetteur-récepteur mobile de partage (210) est associé, lorsqu'une information sur un résultat de mesure indique que le ou les émetteurs-récepteurs mobiles (220 ; 230) sont en mesure de recevoir directement une transmission de données en provenance de l'émetteur-récepteur mobile de partage (210).

8. Émetteur-récepteur de station de base (100) comprenant l'appareil (10) selon la revendication 1.

9. Émetteur-récepteur de station de base (100) selon la revendication 8, comprenant un autre module d'interface permettant de communiquer un contenu de données partagé en provenance de l'émetteur-récepteur mobile de partage (210) à un autre émetteur-récepteur de station de base (110), et/ou dans lequel l'émetteur-récepteur de station de base (100) est associé à un opérateur différent de celui qui exploite l'autre émetteur-récepteur de station de base (110).

10. Procédé destiné à un noeud de réseau d'un système de communication mobile (400), le système de communication mobile (400) permettant de desservir une pluralité d'émetteurs-récepteurs mobiles (210 ; 220 ; 230), le procédé comprenant les étapes suivantes :
recevoir (42) des informations sur un groupe d'un ou plusieurs émetteurs-récepteurs mobiles (220 ; 230) avec lequel un émetteur-récepteur mobile de partage (210) prévoit de partager des données ;
déterminer (44) des informations sur un sous-groupe d'un ou plusieurs émetteurs-récepteurs mobiles (220) du groupe d'émetteurs-récepteurs mobiles (220 ; 230), dont les conditions radio leur permettent de recevoir directement une communication de données en provenance de l'émetteur-récepteur mobile de partage (210) ; et
configurer (46) le sous-groupe d'émetteurs-récepteurs mobiles (220) pour recevoir directement des transmissions de données en provenance de l'émetteur-récepteur mobile de partage (210) **caractérisé en ce que** l'émetteur-récepteur mobile de partage (210) est associé à un émetteur-récepteur de station de base et dans lequel un ou plusieurs émetteurs-récepteurs mobiles du groupe d'émetteurs-récepteurs mobiles (220 ; 230) sont associés à un autre émetteur-récepteur de station de base, le procédé comprenant en outre l'étape suivante :
fournir des informations de configuration à l'autre émetteur-récepteur de station de base qui permettent à l'autre émetteur-récepteur de station de base de configurer le ou les émetteurs-récepteurs mobiles du groupe d'émetteurs-récepteurs mobiles (220 ; 230) pour recevoir directement une transmission de données en provenance de l'émetteur-récepteur mobile de partage (210).

11. Programme informatique contenant un code de programme destiné à réaliser le procédé selon la revendication 10, lorsque le programme informatique est exécuté sur un ordinateur, processeur ou matériel programmable.
